# EUROPEAN PATENT APPLICATION

(11) **EP 1 291 390 A1**
(43) Date of publication of application: **12.03.2003**
(21) Application number: 00931599.5
(22) Date of filing: 29.05.2000
(51) Int. Cl.: C08L 63/00, C08K 3/00, C08K 5/55, C08G 59/66

(54) **CONDUCTIVE RESIN COMPOSITION**

(71) Applicant: Ajinomoto Co., Inc., Tokyo 104-8315 (JP)
(72) Inventor: SAKAMOTO, Hiroshi Ajinomoto Co., Inc., Kawasaki-shi, kanagawa 210-8681 (JP)
(74) Representative: Nicholls, Kathryn Margaret
(86) International application number: JP0003437
(87) International publication number: WO01092416

(57) **Abstract**

Is herein disclosed a conductive polythiol type epoxy resin composition which is improved in a pot life and a storage stability as compared with the conventional polythiol type epoxy resin composition.

The present invention is a conductive resin composition comprising as essential ingredients (1) an epoxy resin having two or more epoxy groups in the molecule, (2) a polythiol compound having two or more thiol groups in the molecule, (3) a solid dispersion-type latent curing accelerator, (4) a boric acid ester compound and (5) conductive particles, and the composition is suitable for use as a conductive material in a wide range of field, including the field of electronics, where a low-temperature quick curability is required.

## Description

### Technical Field

The present invention relates to a polythiol type one-part epoxy resin composition having a conductive property, good low-temperature quick curability and storage stability and excellent thermal resistant and moisture resistant characteristic properties which may be widely utilized as a composition for connecting circuit in the field of an electronic material.

### Background Art

An epoxy resin composition prepared by using a polythiol as a curing agent and a tertiary amine as a curing accelerator is quickly curable even at such a low temperature of 0 °C to - 20 °C and hence has been used as an adhesive, a sealer, a casting mold, etc. which are especially important in the winter season.

However, such an epoxy resin composition has usually quite short pot life of from several seconds to several hours after the mixing of the compounding ingredients, involving such a defect that a sufficient time cannot be taken for the mixing operation of the compounding ingredients, the defoaming and coating operations of the resulting mixture. Also, it is poor in workability since a worker has to prepare the composition whenever it is used. Furthermore, since the leftover unused from such a composition cannot be stored, its caked matter has to be discarded. This is undesirable from the standpoint of a resource saving and an environmental problem.

Japanese Patent Application Laid-Open Nos. Hei 06-211969 and Hei 06-211970 describe an example of a polythiol type epoxy resin composition obtained by using a solid dispersion-type amine adduct latent curing accelerator or a reaction product of a compound having an isocyanate group with a compound having at least one primary or secondary amino group in the molecule as a curing accelerator, thereby an improvement in a pot life can be made. However, the composition was not satisfactory yet in the storage stability, and a low-temperature quick curability as a merit of a polythiol-type epoxy resin composition cannot be brought sufficiently.

In Japanese Patent Application Laid-Open No. Hei 10-298526 there is proposed a composition for connecting circuit which comprises an epoxy resin, a polythiol, a latent curing agent and conductive particles. However, the composition was not yet said to be satisfactory in regard of the storage stability.

### Disclosure of the Invention

An object of the present invention is to provide a polythiol type one-part epoxy resin composition having a conductive property and good storage stability.

As a having ardently studied to solve the above object, the present inventor has found that a one-part polythiol type epoxy resin composition which is excellent in a conductive property, a thermal resistance, a moisture resistant characteristic property and a storage stability can be obtained by adding to (1) an epoxy resin (2) a polythiol compound having two or more thiol groups in the molecule as a curing agent, (3) a solid dispersion-type latent curing accelerator as a curing accelerator, (4) a boric acid ester compound and (5) conductive particles, and has completed the present invention.

That is, the present invention is an epoxy resin composition comprising as essential ingredients (1) an epoxy resin having two or more epoxy groups in the molecule, (2) a polythiol compound having two or more thiol groups in the molecule, (3) a solid dispersion-type latent curing accelerator, (4) a boric acid ester compound and (5) conductive particles.

The epoxy resin which may be used in the present invention may be one having two or more epoxy groups per one molecule on the average. For example, a polyglycidyl ether which may be obtained by reacting a polyhydric phenol such as bisphenol A, bisphenol F, bisphenol AD, catechol, resorcinol or the like or a polyhydric alcohol such as glycerin, polyethylene glycol or the like with epichlorohydrin; a glycidyl ester which may be obtained by reacting a hydroxy carboxylic acid such as p-hydroxybenzoic acid, β-hydroxynaphthoic acid or the like with epichlorohydrin; a polyglycidyl ester which may be obtained by reacting a polycarboxylic acid such as phthalic acid, terephthalic acid or the like with epichlorohydrin; in addition an epoxydized phenolic novolak resin; an epoxydized cresol novolak resin; an epoxydized polyolefin; an alicyclic epoxy resin; and a urethane-modified epoxy resin, etc. may be taken. However, it may be restricted thereto.

As the polythiol compound for use in the present invention, one in which basic impurities are contained in amounts as small as possible from the standpoint of the storage stability is preferable. For example, there may be taken a polythiol compound having two or more thiol groups in the molecule which may be obtained by an esterfication reaction of a polyol with a mercapto organic acid without the need of a basic substance, as exemplified by trimethylolpropane tris(thioglycolate), pentaerythritol tetrakis(thioglycolate), ethylene glycol dithioglycolate, trimethylolpropane tris( β -thiopropionate), pentaerythritol tetrakis( β -thiopropionate), dipentaerythritol poly(β-thiopropionate) or the like.

Likewise, in case of a polythiol where the use of a basic substance as the reaction catalyst is needed in the preparation step, as exemplified by an alkyl polythiol compound such as 1,4-butanedithol, 1,6-hexanedithiol, 1,10-decanedithiol or the like; a polyether containing a terminal thiol group; a polythio ether containing a terminal thiol group; a polythiol compound which may be obtained by the reaction of an epoxy compound with hydrogen sulfide; a polythiol compound having a terminal thiol group which may be obtained by the reaction of a polythiol compound with an epoxy compound, the alkali metal concentration in the polythiol compound prepared is reduced to 50 ppm or less through dealkalization and thus purified polythiol compound having two or more thiol groups in the molecule may also be used.

A three dimensional polymer may be formed by using an epoxy resin having two or more epoxy groups per one molecule on the average in combination with a polythiol compound. Although the reaction between a thiol group and an epoxy group is theoretically 1:1, according to the curing experiment attempted practically the curing reaction occurs even with slightly small amount of the thiol group. As to the mixture ratio of an epoxy resin to a thiol compound, it is recommended that the ratio of SH equivalent weight number in the thiol compound/epoxy equivalent weight number in the epoxy resin becomes 0.5-1.5. When the ratio of thiol group/epoxy group is less than 0.5, the curing is insufficient while when it exceeds 1.5, since an excessive curing agent which did not participate in the curing reaction remains the curing is insufficient. Therefore, when it is outside the above range, since the performance of the cured product does not meet the intended one of the present invention in some case it is not preferable.

The solid dispersion-type latent curing accelerator for use in the present invention is a solid material which is insoluble in an epoxy resin at room temperature and which is solubilized by heating to be capable of acting as an accelerator. Examples thereof include a solid imidazole compound at an ordinary temperature, a solid dispersion-type amine adduct latent curing accelerator such as the reaction product of an amine compound and an epoxy compound (amine-epoxy adduct), the reaction product of an amine compound and an isocyanate compound, the reaction product of an amine compound, a urea compound (urea type adduct), etc. The amount incorporated of the solid dispersion-type latent curing accelerator may be varied depending on the kind of it and the kind of the epoxy resin to be incorporated but in general about 1-60 parts by weight of it based on 100 parts by weight of the epoxy resin is suitable.

The representative examples of the solid dispersion-type amine adduct latent curing accelerator which are on the market are shown below. However, it does not restricted thereto. Examples of an amine adduct type include "Amicure PN-23", "Amicure PN-H", "Amicure MY-24" (trade names, products of Ajinomoto Co., Inc.), "Hardener X-3661S" (a trade name, a product of A.C.R. K.K.), "Hardener X-3670S" (a trade name, a product of A.C.R. K.K.), "Novacure HX-3742", "Novacure HX-3742" (trade names, products of Asahi Chemical Industry Co., Ltd.), etc. Examples of a urea type adduct include "Fujicure FXE-1000", "Fujicure FXR-1030" (trade names, products of Fuji Kasei Kogyo Co., Ltd.), etc.

Although the mechanism of a boric acid ester compound which improves the storage stability of the polythiol type epoxy resin composition and which plays an important role to accomplish one-part type is not identified yet, it is considered that the boric acid ester compound is allowed to react with the surface of the latent curing accelerator to modify the same for encapsulation. The representative examples of the boric acid ester compound include trimethyl borate, triethyl borate, tri-n-propyl borate, triisoproyl borate, tri-n-butyl borate, tripentyl borate, triallyl borate, trihexyl borate, tricyclohexyl borate, trioctyl borate, trinonyl borate, tridecyl borate, tridodecyl borate, trihexadecyl borate, trioctadecyl borate, tris(2-ethylhexyloxy)borane, bis(1,4,7,10-tetraoxaundecyl)(1,4,7,10,13-pentaoxatetradecyl)(1, 4,7-trioxaundecyl)borane, tribenzyl borate, triphenyl borate, tri-o-tolyl borate, tri-m-tolyl borate, triethanolamine borate, etc.

As the addition method of the boric acid ester compounds, it may be incorporated simultaneously with each ingredient of the epoxy resin, the polythiol compound, the solid dispersion-type latent curing accelerator, etc. In addition, the boric acid ester compound may be mixed with the solid dispersion-type latent curing accelerator in advance. In this case, the mixing may be conducted by contacting both the ingredients in a solvent such as methyl ethyl ketone, toluene or the like or in the absence of a solvent or in a liquid epoxy resin. 0.1-20 Parts by weight of the boric acid ester compound is incorporated per 100 parts by weight of the epoxy resin. When the amount of the boric acid ester compound is less than 0.1 part by weight, the stability of the life is bad so that the effect is insufficient. On the other hand, when it exceeds 20 parts by weight since the curing reaction becomes late it is not preferable.

Examples of conductive particles which may be used in the present invention include metal particles such as gold, silver, nickel, solder and the like; carbon and the like. They may be used singly or in combination. In considering the conductive property, the moisture resistance, the thermal resistance and the storage stability, nickel powder is the most preferred. Also, the metal particles may be ones in which the surface of a mineral filler or a plastic as the nucleus has been coated with the above particles. The conductive particles having an average particle size of 0.1-20 µ when measured by a microtrack method is preferred from the standpoint of the workability, dispersibity and the conductive property. As to the amount added of the conductive particles, it may be 100-1000 parts by weight, preferably 200-500 parts by weight based on 100 parts by weight of the resin composition comprising (1)-(4) ingredients from the standpoint of the workability and the conductive property. When it is less than 100 parts by weight, the conductive property is inferior while when it exceeds 1000 parts by weight, the workability becomes bad and therefore it is not preferable.

Various kinds of additives such as a filler, a diluent, a solvent, a pigment, a flexibilizer, a coupling agent, an antioxidant, a thixotropic agent, a dispersant, etc may be added to the epoxy resin composition depending on the necessity.

### Best Modes For Carrying Out the Invention

The present invention is illustrated in more detail by the following examples.

Incidentally, the evaluation was made by the following methods:

The storage stability (life): there was measured the number of days elapsed until the fluidity of the conductive resin composition stored in a thermostat of 25 °C disappeared.

The volume resistivity: the conductive resin composition was spread into a form of a thickness of about 50 µ, a width of 3 mm and a length of 150 mm on PET (polyethylene terephthalate) film and cured at 80 °C for 30 minutes and thereafter the volume resistivity of the resultant cured product was measured at 25 °C.

The moisture resistance test: the cured product prepared by the above method was placed in a thermo-hygrostat of 60°C and 90 %, and the change in the volume resistivity with time was evaluated.

The thermal resistance test: the cured product prepared by the above method was placed in an air thermostat of 100 °C and the change in the volume resistivity with time was evaluated.

### Example 1

6 Parts by weight of tributyl borate was added to 100 parts by weight of bisphenol A type epoxy resin "EP-828" (a trade name, a product of Yuka Shell Epoxy K.K.) and mixed together under a stirring. Thereafter, 10 parts by weight of "Amicure PN-23" (a trade name, a product of Ajinomoto Co., Inc.) as a solid dispersion-type latent curing accelerator was added thereto and mixed sufficiently. 75 Parts by weight of pentaerythritol tetrakis(thiopropionate) "EH317" (a trade name, a product of Adeka Hardner_Asahi Denka Co., Ltd.) as a polythiol compound was further added thereto and mixed sufficiently under vacuum with planetary mixer to prepare a resin composition. Nickel powder (an average particle size:3.5 µm) as conductive particles was mixed with this resin composition in an amount of 400 parts by weight per 100 parts by weight of the resin composition to make a conductive resin composition for evaluation.

### Example 2

6 Parts by weight of triethyl borate was added to 100 parts by weight of bisphenol A type epoxy resin "EP-828" (a trade name, a product of Yuka Shell Epoxy K.K.) and mixed under a stirring. thereafter, 10 parts by weight of "Fujicure FXE 1000" (a trade name, a product of Fuji Kasei Kogyo Co., Ltd.) as a solid dispersion-type latent curing accelerator was added thereto and mixed sufficiently. 75 Parts by weight of trimethylolpropane tris(thiopropionate) "TMTP" (a trade name, a product of Yodo Kagaku Co., Ltd.) as a polythiol compound was further added thereto and mixed sufficiently under vacuum with planetary mixer to prepare a resin composition. Nickel powder (an average particle size:3.5 µm) as conductive particles was mixed with this resin composition in an amount of 400 parts by weight per 100 parts by weight of the resin composition to make a conductive resin composition for evaluation.

### Example 3

6 Parts by weight of triethyl borate was added to 100 parts by weight of bisphenol AF type epoxy resin "ZX-1059" (a trade name, a product of Tohto Kasei Co., Ltd.) and mixed under a stirring. Thereafter, 15 parts by weight of "Amicure PN-23" (a trade name, a product of Ajinomoto Co., Inc.) as a solid dispersion-type latent curing accelerator was added thereto and mixed sufficiently. 80 Parts by weight of trimethylolpropane tris(thiopropionate) "TMTP" (a trade name, a product of Yodo Kagaku Co., Ltd.) as a polythiol compound was further added thereto and mixed sufficiently under vacuum with planetary mixer to prepare a resin composition. Nickel powder (an average particle size:3.5 µm) as conductive particles was mixed with this resin composition in an amount of 400 parts by weight per 100 parts by weight of the resin composition to make a conductive resin composition for evaluation.

### Example 4

6 Parts by weight of tributyl borate was added to 100 parts by weight of bisphenol A type epoxy resin "EP-828" (a trade name, a product of Yuka Shell Epoxy K.K.) and mixed under a stirring. Thereafter, 15 parts by weight of "Amicure PN-23" (a trade name, a product of Ajinomoto Co., Inc.) as a solid dispersion-type latent curing accelerator was added thereto and mixed sufficiently. 80 Parts by weight of trimethylolpropane tris(thiopropionate) "TMTP" (a trade name, a product of Yodo Kagaku Co., Ltd.) as a polythiol compound was further added thereto and mixed sufficiently under vacuum with planetary mixer to prepare a resin composition. Nickel powder (an average particle size:3.5 µm), silver powder (an average particle size:7.0 µm), cupper powder (an average particle size:15 µm) or carbon black (an average particle size: 1 µm) as conductive particles was mixed with this resin composition in an amount of 400 parts by weight based on 100 parts by weight of the resin composition to make a conductive resin composition for evaluation.

### Comparative Example 1

The similar procedure as the above Example 1 was conducted to make a conductive resin composition for evaluation except that a boric acid ester was not mixed therein.

### Comparative Example 2

The similar procedure as the above Example 1 was conducted to make a conductive resin composition for evaluation except that a polythiol was not mixed therein. The result is shown in table 1.

**Table 1**

| | Example 1 | Example 2 | Example 3 | Comparative Example 1 | Comparative Example 2 |
|---|---|---|---|---|---|
| Volume Resistance | 10⁻³ | 10⁻³ | 10⁻³ | 10⁻³ | Could not measured |
| After Moisture Resistance For 600 Hours | 10⁻³ | 10⁻³ | 10⁻³ | 10⁻³ | |
| After Thermal Resistance For 600 Hours | 10⁻² | 10⁻² | 10⁻² | 10⁻² | |
| Life at 25 °C | One month or more | One month or more | One month or more | 2 hours | One month or more |

The cured products of Examples 1-3 indicated an initial volume resistance of 10⁻³ and still kept a volume resistance of 10⁻² or more after the thermal resistance and moisture resistance tests for 600 hours. Also, they had good storage stability for a month or more at 25 °C. Contrary thereto, the composition of Comparative Example 1 where no boric acid ester has been added cured completely in about 2 hours after its preparation. Further, the cured product of Comparative Example 2 where no polythiol has been added indicated that the initial volume resistance was too low to measure.

The results of evaluation in case where the kind of conductive particles was varied according to Example 4 are shown in table 2.

**Table 2**

| | Ni Powder | Ag Powder | Cu Powder | Carbon Black |
|---|---|---|---|---|
| Volume Resistance | 10⁻³ | 10⁻¹ | 10⁻³ | 2∼3 |
| After Moisture Resistance for 600 Hours | 10⁻² | 10⁻¹ | Could not measured | Could not measured |
| Life at 25 °C | ≧One Month | 10 Days | 7 Days | 14 Days |

Nickel powder as conductive particles indicated an initial volume resistance of 10⁻³ and still kept a volume resistance of 10⁻² after the moisture resistance test for 600 hours. However, silver particle indicated a large initial volume resistance. Also, cupper particle caused a remarkable lowering in volume resistance after the moisture resistance test. Carbon black also indicated that the volume resistance decreased greatly after the moisture resistance test for 600 hours so that it could not measured.

### Industrial Applicability

According to the present invention, a conductive resin composition having a prolonged pot life and an improved storage stability can be provided. Said resin composition has a volume resistance of 10⁻³ after cured under heating and still keeps the value even after the thermal resistance and moisture resistance tests was conducted for 600 hours, and therefore not only it is very advantageous over the hitherto known polythiol type epoxy resin composition in the increase of workability and the resource saving but also it is suitable as a conductive material in all fields, including the field of electronics, where a low-temperature quick curability is required.

## Claims

1. A conductive resin composition comprising as essential ingredients (1) an epoxy resin having two or more epoxy groups in the molecule, (2) a polythiol compound having two or more thiol groups in the molecule, (3) a solid dispersion-type latent curing accelerator, (4) a boric acid ester compound and (5) conductive particles.

2. The conductive resin composition as claimed in claim 1 wherein the mixture ratio of (1) the epoxy resin to (2) the polythiol compound is 0.5-1.5 in terms of a SH equivalent weight number of the polythiol compound/an epoxy equivalent weight number of the epoxy resin, (3) the amounts added of the solid dispersion-type latent curing accelerator and of the (4) a borate ester compound being 1-60 parts by weight, 0.1-20 parts by weight, respectively, per 100 parts by weight of the epoxy resin, and the amount incorporated of the conductive particles is 100-1000 parts by weight per 100 parts by weight of the composition consisting of the four ingredients (1) to (4).

3. The conductive resin composition as claimed in any one of claims 1 to 2 wherein the conductive particles are nickel powder.
